# EUROPEAN PATENT APPLICATION

(11) **EP 2 738 041 A2**
(43) Date of publication of application: **04.06.2014**
(21) Application number: 13194183.3
(22) Date of filing: 25.11.2013
(51) Int. Cl.: B60Q 1/08, B60Q 1/10

(54) **Control apparatus of vehicular lamp, vehicular lamp system, and control method for vehicular lamp**

(30) Priority: 30.11.2012 JP 2012262339
(71) Applicant: Koito Manufacturing Co., Ltd., Tokyo 108-8711 (JP)
(72) Inventor: Kasaba, Yusuke, Shizuoka-shi Shizuoka 424-8764 (JP); Yamazaki, Masashi, Shizuoka-shi Shizuoka 424-8764 (JP); Goto, Kazuo, Shizuoka-shi Shizuoka 424-8764 (JP); Toda, Atsushi, Shizuoka-shi Shizuoka 424-8764 (JP)
(74) Representative: Grünecker, Kinkeldey, Stockmair & Schwanhäusser

(57) **Abstract**

A control apparatus of a vehicular lamp (10) includes: a reference information retaining portion (108) configured to retain reference information indicative of a positional relationship of an acceleration sensor axis, a vehicle (300) axis, and a road surface, wherein the reference information is obtained in a predetermined initialization process; a correction ratio generating portion (114) configured to, after the initialization process, calculate an acceleration ratio of an amount of change in a longitudinal acceleration to an amount of change in vertical acceleration of the vehicle (300) while traveling, and derive a correction ratio for correcting a positional relationship of the road surface and at least one of the acceleration sensor axis and the vehicle axis in the reference information, using the obtained acceleration ratio; and a control portion (104) configured to output a signal for adjusting an optical axis position of the vehicular lamp (10), using the acceleration ratio, the reference information, and the correction ratio.

## Description

### BACKGROUND OF THE INVENTION

### 1. Field of the Invention

The invention relates to a control apparatus of a vehicular lamp, a vehicular lamp system, and a control method for a vehicular lamp.

### 2. Description of Related Art

Conventionally, auto-leveling control is known that changes a direction in which light is radiated from a vehicular headlamp, by automatically adjusting an optical axis position of the headlamp according to an inclination angle of a vehicle. Typically with auto-leveling control, the optical axis position of the headlamp is adjusted based on a pitch angle of the vehicle derived from an output value of a vehicle height sensor. In contrast, Japanese Patent Application Publication No. 2012-030782 (JP 2012-030782 A) and Japanese Patent Application Publication No. 2012-030783 (JP 2012-030783 A) each describe a control apparatus of a vehicular lamp that executes auto-leveling control using an inclination sensor such as an acceleration sensor.

When an inclination sensor such as an acceleration sensor, a gyro sensor (an angular velocity sensor or an angular acceleration sensor), or a magnetic field sensor is used, the auto-leveling system is able to be much less expensive and lighter in weight than when a vehicle height sensor is used. As a result, the cost and weight of the vehicle are able to be reduced.

With a conventional control unit of a vehicular lamp, there is room to make auto-leveling control even more accurate.

### SUMMARY OF THE INVENTION

The invention thus provides technology that increases the accuracy of auto-leveling control of a vehicular lamp.

A first aspect of the invention relates to a control apparatus of a vehicular lamp. The control apparatus includes: a receiving portion configured to receive a detection value of an acceleration sensor; a reference information retaining portion configured to retain reference information indicative of a positional relationship of an axis of the acceleration sensor in a state in which the acceleration sensor is mounted to a vehicle, an axis of the vehicle that determines a posture of the vehicle, and a road surface that the vehicle is on, wherein the reference information is obtained in a predetermined initialization process; a correction ratio generating portion configured to, after the initialization process, calculate an acceleration ratio that is a ratio of an amount of change in acceleration in a vehicle longitudinal direction of the vehicle while traveling to an amount of change in acceleration in a vehicle vertical direction of the vehicle while traveling, and to derive a correction ratio for correcting a positional relationship of the road surface and at least one of the axis of the acceleration sensor and the axis of the vehicle in the reference information, using the obtained acceleration ratio; and a control portion configured to, after the correction ratio is derived, out put an adjustment signal instructing that an optical axis position of the vehicular lamp be adjusted, using the acceleration ratio, the reference information, and the correction ratio. The control apparatus according to this aspect enables the accuracy of auto-leveling control of the vehicular lamp to be increased.

The correction ratio generating portion may be configured to plot the detection value of the acceleration sensor of at least one of when the vehicle is accelerating and when the vehicle is decelerating, on a coordinate system in which the acceleration in the vehicle longitudinal direction is set as a first axis and the acceleration in the vehicle vertical direction is set as a second axis, and to calculate as the acceleration ratio an inclination of a vector or a straight line obtained from at least two plotted points.

The correction ratio generating portion may be configured to derive the correction ratio, excluding a change in the acceleration ratio based on the change in the total angle while the vehicle is stopped.

The correction ratio generating portion may be configured to derive the correction ratio, excluding a change in the acceleration ratio based on the change in the total angle while the vehicle is stopped. As a result, the accuracy with which the correction ratio is derived is able to be further increased.

The reference information retaining portion may be configured to retain a reference value of a road surface angle that is an inclination angle of a road surface with respect to a horizontal plane and a reference value of a vehicle posture angle that is an inclination angle of the vehicle with respect to the road surface. In this case, when the vehicle stops, the control portion may be configured to obtain a total angle that is an inclination angle of the vehicle with respect to the horizontal plane from the detection value of the acceleration sensor, and to calculate the road surface angle from the total angle and the reference value of the vehicle posture angle, and update the reference value of the road surface angle with the obtained road surface angle. Further, while the vehicle is stopped, the control portion may be configured to obtain a total angle that is an inclination angle of the vehicle with respect to the horizontal plane from the detection value of the acceleration sensor, to calculate the vehicle posture angle from the total angle and the reference value of the road surface angle, and to generate the adjustment signal instructing that the optical axis position be adjusted corresponding to a change in the total angle, using the obtained vehicle posture angle, and the control portion may be configured to update the reference value of the vehicle posture angle with the obtained vehicle posture angle. Further, the control portion may be configured to plot the detection value of the acceleration sensor of at least one of when the vehicle is accelerating and when the vehicle is decelerating, on a coordinate system in which the acceleration in the vehicle longitudinal direction is set as a first axis and the acceleration in the vehicle vertical direction is set as a second axis, to calculate an inclination of a vector or a straight line from at least two plotted points, to calculate the vehicle posture angle using the obtained inclination of the vector or the straight line, and to correct the optical axis position adjusted corresponding to the change in the total angle while the vehicle is stopped, using the obtained vehicle posture angle. Further, the control portion may be configured to obtain a total angle that is an inclination angle of the vehicle with respect to the horizontal plane from the detection value of the acceleration sensor; and to stop outputting the adjustment signal or output a maintain signal instructing that the optical axis position be maintained, in response to a change in the total angle while the vehicle is traveling.

A second aspect of the invention relates to a vehicular lamp system including: a vehicular lamp in which an optical axis is adjustable; an acceleration sensor; and a control apparatus configured to adjust an optical axis position of the vehicular lamp. The control apparatus includes: a receiving portion configured to receive a detection value of the acceleration sensor; a reference information retaining portion configured to retain reference information indicative of a positional relationship of an axis of the acceleration sensor in a state in which the acceleration sensor is mounted to a vehicle, an axis of the vehicle that determines a posture of the vehicle, and a road surface that the vehicle is on, wherein the reference information is obtained in a predetermined initialization process; a correction ratio generating portion configured to, after the initialization process, calculate an acceleration ratio that is a ratio of an amount of change in acceleration in a vehicle longitudinal direction of the vehicle while traveling to an amount of change in acceleration in a vehicle vertical direction of the vehicle while traveling, and to derive a correction ratio for correcting a positional relationship of the road surface and at least one of the axis of the acceleration sensor and the axis of the vehicle in the reference information, using the obtained acceleration ratio; and a control portion configured to, after the correction ratio is derived, output an adjustment signal instructing that an optical axis position of the vehicular lamp be adjusted, using the acceleration ratio, the reference information, and the correction ratio. The vehicular lamp system according in this aspect enables the accuracy of auto-leveling control of a vehicular lamp to be increased.

A third aspect of the invention relates to a control method for a vehicular lamp. The control method includes: retaining reference information indicative of a positional relationship of an axis of an acceleration sensor in a state in which the acceleration sensor is mounted to a vehicle an axis of the vehicle that determines a posture of the vehicle, and a road surface that the vehicle is on, wherein the reference information is obtained in a predetermined initialization process; calculating, after the initialization process, an acceleration ratio that is a ratio of an amount of change in acceleration in a vehicle longitudinal direction of the vehicle while traveling to an amount of change in acceleration in a vehicle vertical direction of the vehicle while traveling; deriving a correction ratio for correcting a positional relationship of the road surface and at least one of the axis of the acceleration sensor and the axis of the vehicle in the reference information, using the obtained acceleration ratio; and outputting, after the correction ratio is derived, an adjustment signal instructing that an optical axis position of the vehicular lamp be adjusted, using the acceleration ratio, the reference information, and the correction ratio. The control method according to this aspect enables the accuracy of auto-leveling control of a vehicular lamp to be increased.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a vertical cross section schematically showing a headlamp unit that includes a vehicular lamp to be controlled by a control apparatus according to one example embodiment of the invention;
FIG. 2 is a functional block diagram illustrating the operational interaction between the headlamp unit, a vehicle control ECU, and a leveling ECU;
FIG. 3 is a view showing a frame format of an acceleration vector generated in a vehicle, and an inclination angle of the vehicle that is able to be detected by an inclination sensor;
FIGS. 4A and 4B are views each showing a frame format of a relationship between a direction of a movement acceleration vector of the vehicle, and a vehicle posture angle;
FIG. 5 is a graph showing a relationship between acceleration in a vehicle longitudinal direction, and acceleration in a vehicle vertical direction;
FIG. 6 is a view showing a frame format of error in an optical axis angle caused by an inclination of a reference road surface;
FIG. 7 is a flowchart of auto-leveling control executed by the control apparatus of a vehicular lamp according to the example embodiment; and
FIG. 8 is another flowchart of auto-leveling control executed by the control apparatus of a vehicular lamp according to the example embodiment.

### DETAILED DESCRIPTION OF EMBODIMENTS

Hereinafter, example embodiments of the invention will be described with reference to the accompanying drawings. Similar or equivalent constituent elements, members, and processes in the drawings will be denoted by like reference characters, and redundant descriptions thereof will be omitted as appropriate. Also, the example embodiments are only examples and are not intended to limit the invention. All characteristics and combinations thereof described in the example embodiments are not necessarily essential to the invention.

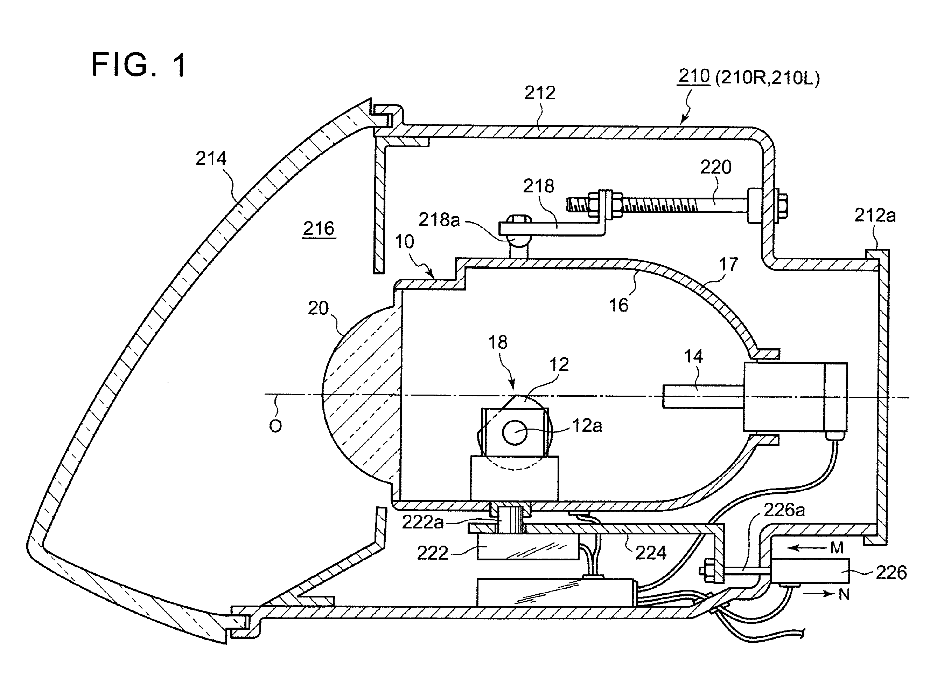

FIG. 1 is a vertical cross section schematically showing a headlamp unit that includes a vehicular lamp to be controlled by a control apparatus according to one example embodiment of the invention. A headlight unit 210 is a structure in which a pair of headlamp units 210R and 210L are formed bilaterally symmetrical, one on the left and one on the right in the width direction of the vehicle. The headlamp 210R on the right side and the headlamp unit 210L on the left side have substantially the same structure, so only the structure of the headlamp unit 210R on the right side will be described below. The headlamp unit 210R includes a lamp body 212 that has an open portion on a vehicle front side, and a translucent cover 214 that covers this open portion. The lamp body 212 has a detachable cover 212a on a vehicle rear side. A lamp chamber 216 is formed by the lamp body 212 and the translucent cover 214. A lamp unit 10 that serves as a vehicular lamp is housed in the lamp chamber 216.

A lamp bracket 218 that has a pivot mechanism 218a is formed in the lamp unit 10. The lamp unit 10 is configured to pivot in the vertical and lateral directions about the pivot mechanism 218a. The lamp bracket 218 is screwed to an aiming adjustment screw 220 that is supported by the lamp body 212. A rotating shaft 222a of a swivel actuator 222 is fixed to a lower surface of the lamp unit 10. The swivel actuator 222 is fixed to a unit bracket 224. A leveling actuator 226 is connected to the unit bracket 224. The leveling actuator 226 is formed by a motor or the like that slides (i.e., extends and contracts) a rod 226a in the directions of arrows M and N, respectively, for example. By sliding the rod 226a in the directions of arrows M and N, the lamp unit 10 is placed in a backward tilting posture and a forward tilting posture. As a result, leveling adjustment that changes a pitch angle of an optical axis O up and down is possible.

The lamp unit 10 includes a shade mechanism 18 that includes a rotating shade 12, a light source 14, a lamp housing 17 that supports a reflector 16 on an inside wall, and a projection lens 20. An incandescent bulb, a halogen bulb, a discharge bulb, or an LED or the like may be used as the light source 14. At least a portion of the reflector 16 has an elliptical spheroidal shape, and the reflector 16 reflects light emitted from the light source 14. Some of the light from the light source 14 and the light reflected by the reflector 16 is led to the projection lens 20. The rotating shade 12 is a cylindrical member that is able to rotate about a rotating shaft 12a, and has a notched portion and a plurality of shade plates, not shown. A predetermined light distribution pattern is formed by either the notched portion or the shade plates being moved on the optical axis O. The projection lens 20 is formed by a planoconvex aspherical lens, and projects a light source image formed on a rear side focal plane onto a virtual vertical screen forward of the lamp as an inverted image.

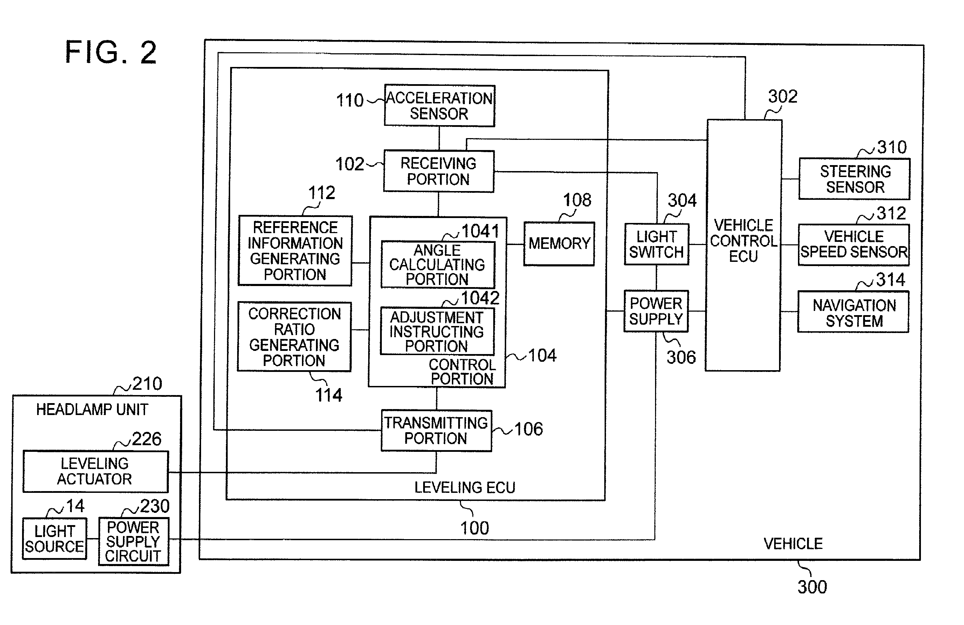

FIG. 2 is a functional block diagram illustrating the operational interaction between the headlamp unit, a vehicle control ECU, and a leveling ECU. The headlamp unit 210 in FIG. 2 includes the headlamp unit 210R and the headlamp 210L. Also, a leveling ECU 100 is realized by an element or a circuit such as memory or a CPU of a computer as a hardware structure, and a computer program or the like as a software structure. FIG. 2 is a view of functional blocks realized by the interaction of these. Therefore, it is understood by one skilled in the art that these functional blocks may be realized in various forms by a combination of hardware and software.

The leveling ECU 100 that serves as the control apparatus of a vehicular lamp includes a receiving portion 102, a control portion 104, a transmitting portion 106, memory 108 as a reference information retaining portion, an acceleration sensor 110, a reference information generating portion 112, and a correction ratio generating portion 114. The leveling ECU 100 is arranged near a dashboard of a vehicle 300, for example. The position where the leveling ECU 100 is arranged is not particularly limited. That is, the leveling ECU 100 may also be provided inside the headlamp unit 210, for example. Also, the acceleration sensor 110 may be provided outside the leveling ECU 100. A vehicle control ECU 302 and a light switch 304 are connected to the leveling ECU 100. Signals output from the vehicle control ECU 302 and the light switch 304 are received by the receiving portion 102. The receiving portion 102 also receives a detection value of the acceleration sensor 110.

A steering sensor 310, a vehicle speed sensor 312, and a navigation system 314 and the like are connected to the vehicle control ECU 302. Signals output from these sensors are received by the receiving portion 102 of the leveling ECU 100 via the vehicle control ECU 302. The light switch 304 transmits signals, such as a signal indicative of the turning on and off of the headlamp unit 210 and a signal indicative of execution of auto-leveling control, to a power supply 306, the vehicle control ECU 302, and the leveling ECU 100 and the like, in response to an operation performed by a driver.

A signal received by the receiving portion 102 is transmitted to the control portion 104. The control portion 104 controls the optical axis O of the lamp unit 10 using the detection value of the acceleration sensor 110. The control portion 104 includes an angle calculating portion 1041 and an adjustment instructing portion 1042. The angle calculating portion 1041 generates pitch angle information of the vehicle 300 using the detection value of the acceleration sensor 110 and, when necessary, information retained in the memory 108. The adjustment instructing portion 1042 generates an adjustment signal indicative of an optical axis adjustment of the lamp unit 10 using the pitch angle information generated by the angle calculating portion 1041. The control portion 104 outputs the adjustment signal generated by the adjustment instructing portion 1042 to the leveling actuator 226 via the transmitting portion 106. The leveling actuator 226 is driven based on the received adjustment signal, such that the optical axis O of the lamp unit 10 is adjusted in the pitch angle direction.

The reference information generating portion 112 generates, in an initialization process of the vehicle that will be described later, reference information indicative of the positional relationship between an axis of the acceleration sensor when the acceleration sensor 110 is mounted in the vehicle 300, an axis of the vehicle that determines the posture of the vehicle 300, and the surface of a road that the vehicle 300 is on. The surface of a road that the vehicle 300 is on is a reference road surface that the vehicle is on when the initialization process is performed. The generated reference information is retained in the memory 108. After the initialization process, the correction ratio generating portion 114 calculates a ratio (an acceleration ratio) of an amount of change in acceleration in the vehicle longitudinal direction of the vehicle 300 while traveling, to an amount of change in acceleration in the vehicle vertical direction of the vehicle 300 while traveling. Then, the correction ratio generating portion 114 derives a correction ratio for correcting the positional relationship between the road surface and at least one of an axis of the vehicle and the axis of the acceleration sensor in the reference information, using the obtained acceleration ratio. The operation of the control portion 104, the reference information generating portion 112, and the correction ratio generating portion 114 will be described in detail later.

The power supply 306 that supplies power to the leveling ECU 100, the vehicle control ECU 302, and the headlamp unit 210 is mounted in the vehicle 300. When there is a command to turn on the headlamp unit 210 by operation of the light switch 304, power is supplied from the power supply 306 to the light source 14 via a power supply circuit 230.

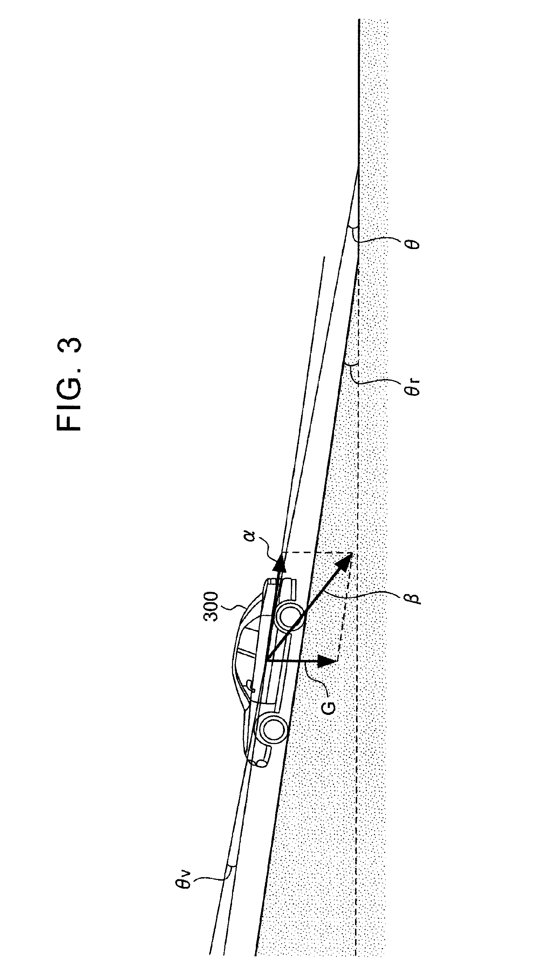

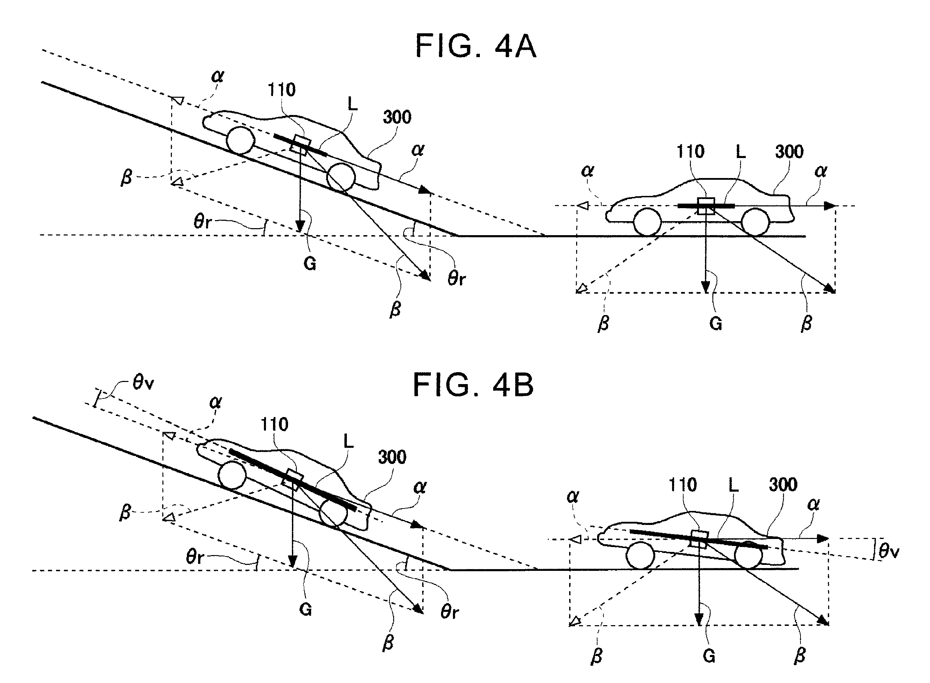

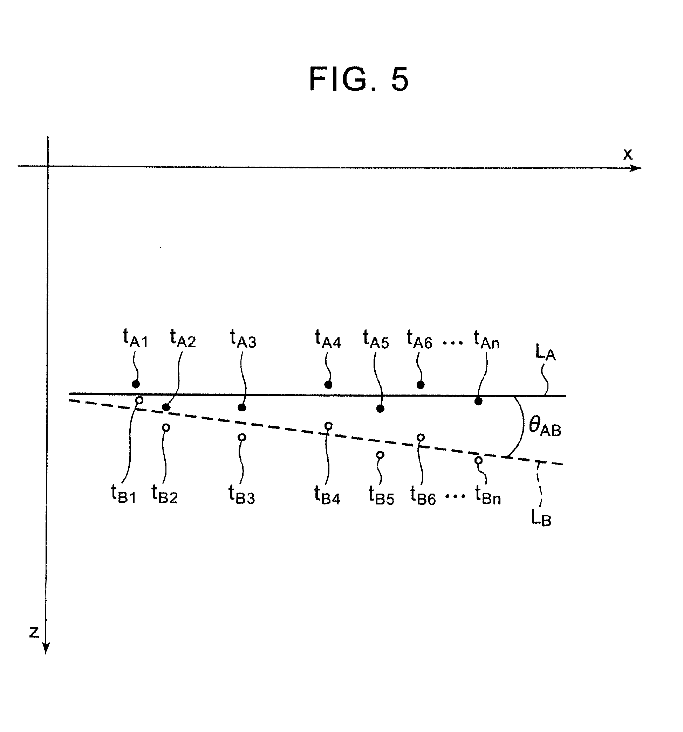

Continuing on, auto-leveling control by the leveling ECU 100 having the structure described above will now be described in detail. FIG. 3 is a view showing a frame format of an acceleration vector generated in a vehicle, and an inclination angle of the vehicle that is able to be detected by an inclination sensor. FIGS. 4A and 4B are views each showing a frame format of a relationship between a direction of a movement acceleration vector of the vehicle, and a vehicle posture angle. FIG. 4A is a view of a state in which a vehicle posture angle θv does not change, and FIG. 4B is a view of a state in which the vehicle posture angle θv changes. Also, in FIGS. 4A and 4B, the solid arrows indicate a movement acceleration vector α and a resultant acceleration vector β generated when the vehicle 300 travels forward, and the broken arrows indicate the movement acceleration vector α and the resultant acceleration vector β generated when the vehicle 300 decelerates or travels in reverse. FIG. 5 is a graph showing the relationship between acceleration in the vehicle longitudinal direction, and acceleration in the vehicle vertical direction.

For example, when there is luggage in a luggage compartment in a rear portion of the vehicle or an occupant is seated in a rear seat, the vehicle will be in a backward tilting posture, and when the luggage is taken out of the luggage compartment or the occupant gets out of the rear seat, the vehicle will tilt forward from the backward tilting posture. When the vehicle is in a backward tilting posture or a forward tilting posture, the illuminating direction of the lamp unit 10 will also fluctuate up and down, and the forward illuminating distance will become longer and shorter. Therefore, the leveling ECU 100 derives an inclination angle in a pitch direction of the vehicle, or a change therein, from the detection value of the acceleration sensor 110, and sets the pitch angle of the optical axis O (hereinafter, this angle will be referred to as the "optical axis angle θo" when appropriate) to an angle according to the vehicle posture. Even if the vehicle posture changes, the reach of the forward illumination is able to be optimally adjusted by executing auto-leveling control that performs a leveling adjustment of the lamp unit 10 in real time based on the vehicle posture.

The acceleration sensor 110 is a three-axis acceleration sensor that has a X-axis, a Y-axis, and a Z-axis that are all orthogonal to each other, for example. The acceleration sensor 110 is mounted to the vehicle 300 in an arbitrary posture, and detects an acceleration vector generated in the vehicle 300. While the vehicle 300 is traveling, gravitational acceleration and movement acceleration generated by movement of the vehicle 300 are generated in the vehicle 300. Therefore, the acceleration sensor 110 is able to detect the resultant acceleration vector β that is a resultant of a gravitational acceleration vector G and the movement acceleration vector α, as shown in FIG. 3. Also, while the vehicle 300 is stopped, the acceleration sensor 110 is able to detect the gravitational acceleration vector G. The acceleration sensor 110 outputs the numerical value of each axis component of the detected acceleration vector.

As described above, the acceleration sensor 110 is mounted in an arbitrary posture to the vehicle 300, so the X-axis, the Y-axis, and the Z-axis of the acceleration sensor 110 are not necessarily aligned with the longitudinal, lateral, and vertical axes of the vehicle 300 that determine the posture of the vehicle 300. Therefore, the control portion 104 must convert the components of the three axes output from the acceleration sensor 110, i.e., the components of a sensor coordinate system, to components of the three axes of the vehicle 300, i.e., components of a vehicle coordinate system. In order to convert the axis components of the acceleration sensor 110 to axis components of the vehicle 300, information indicative of the positional relationship between the axis of the acceleration sensor 110 when it is mounted to the vehicle 300 and the axis of the vehicle 300 (hereinafter, this information will be referred to as "reference information" when appropriate) is necessary. Thus, the reference information generating portion 112 generates reference information in the manner described below, for example.

First, the vehicle 300 is set in a first reference state at a manufacturing plant of the vehicle manufacturer or a maintenance shop of a dealer or the like, for example. The first reference state is a state in which the vehicle 300 is placed on a road surface designed to be parallel to a horizontal plane (hereinafter, this road surface will be referred to as a "reference road surface" when appropriate). Then, an initialization signal is sent to the leveling ECU 100 via communication of a Controller Area Network (CAN) or a switch operation of an initialization processing device at the plant or shop, for example. Upon receiving the initialization signal, the control portion 104 starts to make an initial aiming adjustment, and matches the optical axis O of the lamp unit 10 to the initial set position. Also, the reference information generating portion 112 maps the positional relationship between the reference road surface that the vehicle is on (i.e., the horizontal plane), the coordination system of the vehicle 300, and the coordination system of the acceleration sensor 110. That is, the reference information generating portion 112 stores the detection value of the acceleration sensor 110 in the first reference state in the memory 108 as a first reference vector S1 = (X1, Y1, Z1). Thus, the positional relationship between the axis of the acceleration sensor and the reference road surface or the horizontal plane is able to be mapped. Next, the vehicle 300 is placed in a second reference state that differs from the first reference state only with respect to the pitch angle. For example, the vehicle 300 may be placed in the second reference state by applying a load to a front portion or a rear portion of the vehicle 300 that is in the first reference state. The reference information generating portion 112 then stores the detection value of the acceleration sensor 110 when the vehicle 300 is in the second reference state in the memory 108 as a second reference vector S2 (= X2, Y2, Z2).

An offset between the Z-axis of the acceleration sensor 110 and the vertical axis of the vehicle 300 is able to be ascertained by obtaining the first reference vector S1. However, there may be cases in which the offset between the longitudinal axis and the lateral axis of the vehicle 300 and the X-axis and the Y-axis of the acceleration sensor 110 is unable to be ascertained by only the first reference vector S1. For example, when the acceleration sensor 110 is in a state horizontal with respect to the horizontal plane, the first reference vector S1 will be (0, 0, 1). In this case, even if the acceleration sensor 110 rotates about the Z-axis, the detection values of the X-axis component and the Y-axis component of the acceleration sensor 110 will still be 0. Therefore, if the X-axis and the Y-axis of the acceleration sensor 110 are offset from the longitudinal axis and the lateral axis of the vehicle, respectively, this offset will not be able to be detected.

On the other hand, in the example embodiment, the second reference vector S2 is obtained. As described above, the second reference state differs from the first reference state only with respect to the pitch angle, i.e., only the longitudinal axis and the vertical axis of the vehicle 300 are different. Therefore, the offset between the longitudinal axis and the lateral axis of the vehicle 300 and the X-axis and the Y-axis of the acceleration sensor 110 is able to be ascertained from a change in the component of the second reference vector S2 with respect to the first reference vector S1. Thus, the positional relationship between the axis of the acceleration sensor and the axis of the vehicle is able to be mapped, and as a result, the positional relationship between the axis of the vehicle and the reference road surface is able to be mapped. The reference information generating portion 112 stores a conversion table with the mapped positional relationships between the axis of the acceleration sensor 110, the axis of the vehicle 300, and the reference road surface in the memory 108 as reference information.

Also as described above, the inclination of the vehicle 300 with respect to the gravitational acceleration vector G can be derived from the detection value of the acceleration sensor 110 while the vehicle is stopped. That is, a total angle θ that is the inclination angle of the vehicle with respect to the horizontal plane is able to be derived from the detection value of the acceleration sensor 110. Here, the total angle θ includes a road surface angle θr that is an inclination angle of the road surface with respect to the horizontal plane, and a vehicle posture angle θv that is the inclination angle of the vehicle with respect to the road surface. The road surface angle θr, the vehicle posture angle θv, and the total angle θ are angles in the pitch direction of the vehicle 300.

On the other hand, the auto-leveling control aims to maintain the optimum forward reach of the radiated light by absorbing a change in the forward illumination distance of the vehicle lamp that accompanies a change in the inclination angle in the pitch direction of the vehicle. Therefore, the inclination angle of the vehicle required for the auto-leveling control is the vehicle posture angle θv. That is, in the auto-leveling control, the optical axis position of the lamp unit 10 is preferably adjusted when the vehicle posture angle θv changes, and the optical axis position of the lamp unit 10 is preferably maintained when the road surface angle θr changes. In order to realize this, information regarding the vehicle posture angle θv needs to be extracted from the total angle θ obtained from the acceleration sensor 110.

The vehicle 300 moves parallel to the road surface. Therefore, the movement acceleration vector α is a vector that is parallel to the road surface regardless of the vehicle posture angle θv. Also, as shown in FIG. 4A, when the vehicle posture angle θv of the vehicle 300 is 0°, theoretically, the longitudinal axis L of the vehicle 300 (and also the X-axis of the acceleration sensor 110 when the vehicle axis is in line with the sensor axis) is parallel to the road surface, so the movement acceleration vector α is a vector that is parallel to the longitudinal axis L (or the X-axis of the sensor). Therefore, when the magnitude of the movement acceleration vector α changes due to acceleration or deceleration of the vehicle 300, the trajectory of a tip end of the resultant acceleration vector β detected by the acceleration sensor 110 is a straight line parallel to the longitudinal axis L.

On the other hand, as shown in FIG. 4B, when the vehicle posture angle θv is not 0°, the longitudinal axis L is offset at an angle with respect to the road surface, so the movement acceleration vector α is a vector that extends at an angle with respect to the longitudinal axis L. Thus, the trajectory of the tip end of the resultant acceleration vector β when the magnitude of the movement acceleration vector α changes due to acceleration or deceleration of the vehicle 300 becomes a straight line that is inclined with respect to the longitudinal axis L.

Therefore, the angle calculating portion 1041 calculates a ratio (an acceleration ratio) of the amount of change in the acceleration in the vehicle longitudinal direction to the amount of change in the acceleration in the vehicle vertical direction, of at least one of when vehicle 300 is accelerating and when the vehicle 300 is decelerating. That is, the angle calculating portion 1041 plots the detection values of the acceleration sensor 110 of at least one of when the vehicle 300 is accelerating and when the vehicle 300 is decelerating, on a coordinate system in which the acceleration in the vehicle longitudinal direction is set as a first axis (X-axis) and the acceleration in the vehicle vertical direction is set as a second axis (Z-axis), as shown in FIG. 5. Points t_{Al} to t_{An} are detection values at times tₗ to tₙ in the state shown in FIG. 4A. Points t_{Bl} to t_{Bn} are detection values at times tₗ to tₙ in the state shown in FIG. 4B.

Then the angle calculating portion 1041 derives a straight line from a plurality of plotted points (at least two points), and calculates the inclination of the obtained straight line as the acceleration ratio. The straight line may also be a vector. The angle calculating portion 1041 obtains linear approximation formulas L_{A} and L_{B} using a least squares method or a moving-average method for the plurality of plotted points t_{Al} to t_{An} and t_{Bl} to t_{Bn}, and then calculates the inclination of these linear approximation formulas L_{A} and L_{B} as the acceleration ratio.

When the vehicle posture angle θv is 0°, the linear approximation formula L_{A} that is parallel to the X-axis of the coordinate system is obtained from the detection value of the acceleration sensor 110. That is, the inclination of the linear approximation formulas L_{A} is 0. On the other hand, when the vehicle posture angle θv is not 0°, the linear approximation formula L_{B} that has an inclination corresponding to the vehicle posture angle θv is obtained from the detection value of the acceleration sensor 110. The angle formed by the linear approximation formula L_{A} and the linear approximation formula L_{B} (i.e., θ_{AB} in FIG. 5), in other words, the angle formed by the X-axis and the linear approximation formula L_{B}, i.e., the inclination of the linear approximation formula L_{B} itself, equals the vehicle posture angle θv.

Therefore, the vehicle posture angle θv is able to be known from the detection value of the acceleration sensor 110, by measuring the acceleration ratio (i.e., the inclination of the straight line). Then, more accurate auto-leveling control can be realized by using the information of the obtained vehicle posture angle θv.

The leveling ECU 100 according to this example embodiment executes auto-leveling control such as that described below, using information regarding the vehicle posture angle θv obtained from the inclination of the straight line described above. That is, in the initialization process described above, the control portion 104 stores the detection value of the acceleration sensor 110 in the first reference state in the memory 108 as a reference value (θr = 0°) of the road surface angle θr and a reference value (θv = 0°) of the vehicle posture angle θv.

In a situation in which the vehicle 300 is actually used, while the vehicle is traveling, it would be unusual for the amount of loaded cargo or the number of occupants to increase or decrease, and thus unusual for the vehicle posture angle θv to change. Therefore, a change in the total angle θ while traveling can be assumed to be a change in the road surface angle θr. Thus, the adjustment instructing portion 1042 either stops outputting an adjustment signal in response to a change in the total angle θ while the vehicle is traveling or generates and outputs a maintain signal instructing that the optical axis position be maintained. As a result, the optical axis angle θo is inhibited from being displaced in response to a change in the total angle θ while the vehicle is traveling. The adjustment instructing portion 1042 may stop outputting the adjustment signal by not generating the adjustment signal, or may stop an adjustment signal that has been generated from being output.

Then, when the vehicle stops, the control portion 104 retains the road surface angle θr obtained from the detection value of the acceleration sensor 110 and the reference value of the vehicle posture angle θv, as the reference value. More specifically, the angle calculating portion 1041 derives the current total angle θ (i.e., the total angle θ when the vehicle stops) from the detection value of the acceleration sensor 110 and obtains the road surface angle θr by subtracting the reference value of the vehicle posture angle θv from the derived current total angle θ. Then the obtained road surface angle θr is retained in the memory 108 as a new reference value. As a result, a change in the total angle θ when the vehicle is traveling, that is presumed to be a change in the road surface angle θr, is reflected in the reference value of the road surface angle θr. The angle calculating portion 1041 may also calculate a difference in the total angle θ before and after the vehicle travels, when the vehicle stops, and calculate a new reference value of the road surface angle θr based on this difference.

The phrase "while the vehicle is traveling" refers to a period of time from when the detection value of the vehicle speed sensor 312 exceeds 0 until the detection value of the vehicle speed sensor 312 becomes 0, for example. The phrase "when the vehicle stops" refers to a time when the output value of the acceleration sensor 110 becomes stabilize after the detection value of the vehicle speed sensor 312 has become 0. The time "when the output value of the acceleration sensor 110 becomes stabilize" may refer to a time when the amount of change per unit time in the detection value of the acceleration sensor 110 has become equal to or less than a predetermined amount, or after a predetermined period of time has passed after the detection value of the vehicle speed sensor 312 has become 0. This time of "when the vehicle stops", "the predetermined amount", and "the predetermined period of time" may be set as appropriate based on simulation or testing by a designer.

However, while the vehicle is stopped, it would be unusual for the vehicle 300 to move and the road surface angle θr to change. Therefore, a change in the total angle θ while the vehicle is stopped may be presumed to be a change in the vehicle posture angle θv. Thus, with respect to a change in the total angle θ while the vehicle is stopped, the adjustment instructing portion 1042 generates and outputs an adjustment signal using the vehicle posture angle θv obtained from the detection value of the acceleration sensor 110 and the reference value of the road surface angle θr. More specifically, while the vehicle is stopped, the angle calculating portion 1041 derives the current total angle θ from the from the detection value of the acceleration sensor 110 and obtains the vehicle posture angle θv by subtracting the reference value of the road surface angle θr from the current total angle θ. The obtained vehicle position angle θv is retained in the memory 108 as a new reference value. The vehicle posture angle θv is repeatedly calculated at a predetermined timing, for example. The angle calculating portion 1041 may also calculates a difference between the total angle θ detected last time and the current total angle θ, and calculate a new reference value of the vehicle posture angle θv by including this difference in the reference value of the vehicle posture angle θv.

Then, the adjustment instructing portion 1042 generates an adjustment signal using the obtained vehicle posture angle θv (or the updated reference value of the vehicle posture angle θv). For example, the adjustment instructing portion 1042 determines the optical axis angle θo using a conversion table with the mapped optical axis angle θo and the vehicle posture angle θv that is stored in the memory 108 beforehand, and generate an adjustment signal indicative of an adjustment of the optical axis O so as to realize this optical axis angle θo. Also, the adjustment instructing portion 1042 outputs the adjustment signal to the leveling actuator 226 via the transmitting portion 106. The period "while the vehicle is stopped" is a period of time from when the output value of the acceleration sensor 110 becomes stable (i.e., when the vehicle stops) until the detection value of the vehicle speed sensor 312 exceeds 0, for example. This period "while the vehicle is stopped" may be set appropriately based on simulation or testing by the designer.

Also, for a predetermined period of time, including when the vehicle 300 is accelerating and / or decelerating, e.g., when the vehicle is taking off from a standstill or stops, the angle calculating portion 1041 plots, sequentially for example, the detection values of the acceleration sensor 110 on a coordinate system in which acceleration in the vehicle longitudinal direction is set as the first axis, and acceleration in the vehicle vertical direction is set as the second axis. The angle calculating portion 1041 then calculates a linear approximation formula either continuously or at predetermined intervals of time, from the obtained plots. Then, the angle calculating portion 1041 calculates the vehicle posture angle θv using the inclination of the obtained straight line. The adjustment instructing portion 1042 executes correction control that corrects the optical axis position adjusted corresponding to the change in the total angle θ while the vehicle is stopped, using the obtained vehicle posture angle θv.

Here, in the initialization process, the reference road surface that the vehicle 300 is on is theoretically a horizontal road surface in order to assume the first reference state. However, in actuality, a case may arise in which the reference road surface is inclined with respect to a horizontal plane. For example, an error range of the optical axis angle θo allowed in optical axis control of the lamp unit 10 is ± 0.5% (an angle in which the optical axis angle θo rises or falls 5 mm 1000 mm ahead), so rather high accuracy is required in optical axis control. At a maintenance shop of a dealer or the like, a reference road surface with an inclination that is less than ± 0.5% with respect to a horizontal plane may be rather difficult to achieve.

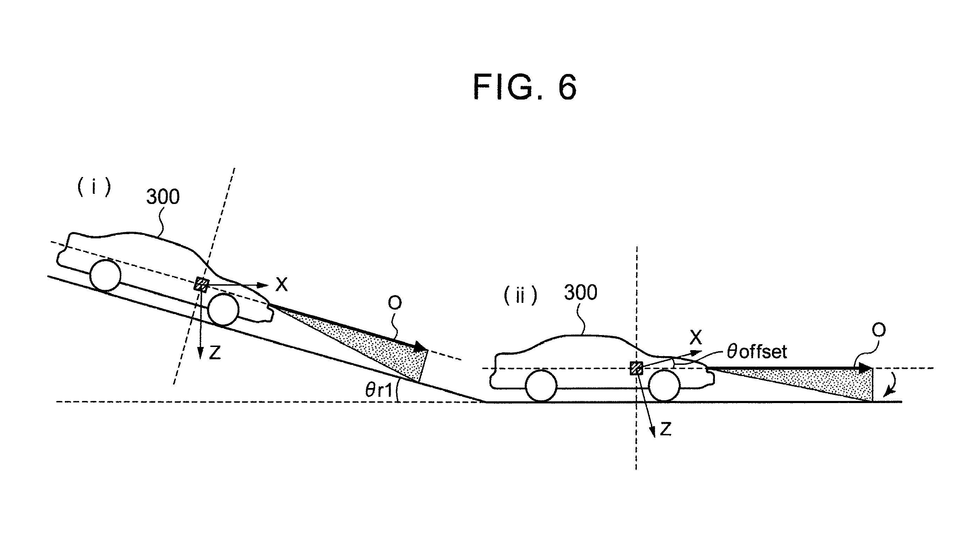

FIG. 6 is a view showing a frame format of error in the optical axis angle caused by the inclination of the reference road surface. In the initialization process, the positional relationship between the reference road surface, i.e., a horizontal plane, and a coordinate system is mapped based on the premise that the reference road surface is a horizontal surface. That is, the X-axis of the acceleration sensor 110 (or the longitudinal axis of the vehicle 300) is set so as to be parallel to a horizontal plane, and the Z-axis (or the vertical axis) is set so as to be vertical to a horizontal plane, and this setting information is stored as a conversion table in the memory 108. Therefore, when the reference road surface is inclined by an angle θr1 with respect to a horizontal plane (i.e., the state (i) in FIG. 6), the positional relationship between the coordinate system and the road surface is set mistaking the road surface that is inclined by the angle θr1 for a horizontal surface. As a result, the X-axis and the Z-axis (or the longitudinal axis and the vertical axis of the vehicle) of the acceleration sensor 110 specified in this initialization process is offset by the angle θr1 with respect to the X-axis and the Z-axis (or the longitudinal axis and the vertical axis) when the initialization process is performed on an ideally horizontal road surface, or the road surface that the vehicle 300 is on. In this case, a straight line derived when the vehicle 300 after the initialization process is traveling on a horizontal road surface (the state (ii) in FIG. 6) in the first reference state (i.e., when the vehicle posture angle θv is 0°) should originally have an inclination of 0, but because the coordinate system specified in the initialization process is inclined with respect to the road surface, the straight line ends up being inclined by the angle θr1 with respect to the X-axis of the sensor coordinate system (or the longitudinal axis of the vehicle coordinate system). Also, even if the vehicle 300 after the initialization process is traveling on an inclined road surface, the derived straight line will end up being inclined with respect to the X-axis. Therefore, an error θoffset occurs in the correction control due to the inclination of the reference road surface. In the states shown in (i) and (ii) in FIG. 6, the optical axis O adjusted in the initialization process will end up changing so that it is lower than the initial position when the vehicle 300 is traveling on a horizontal road surface.

With control that adjusts the optical axis in response to a change in the total angle θ while stopped and stops the optical axis adjustment in response to a change in the total angle θ while traveling, the amount of change in the total change θ is reflected in the reference value, i.e., the road surface angle θr and the vehicle posture angle θv are derived by integration of the gravitational acceleration. Therefore, error due to the inclination of the reference road surface is able to be inhibited from occurring. On the other hand, with the correction control described above, the vehicle posture angle θv is derived from the inclination of a linear approximation formula, and error in the optical axis angle θo occurs from the inclination of the reference road surface as described above.

Therefore, after the initialization process, the correction ratio generating portion 114 executes a learning process described below. That is, for a predetermined period of time after the initialization process, the correction ratio generating portion 114 calculates the ratio of the amount of change in the acceleration in the vehicle longitudinal direction of the vehicle 300 while traveling, to the amount of change in the acceleration in the vehicle vertical direction of the vehicle 300 while traveling (i.e., the acceleration ratio). More specifically, the correction ratio generating portion 114 plots the detection values of the acceleration sensor 110 of at least one of when the vehicle 300 is accelerating and when the vehicle 300 is decelerating, on a coordinate system in which the acceleration in the vehicle longitudinal direction is set as the first axis, and the acceleration in the vehicle vertical direction is set as the second axis, and then obtains the inclination of the vector or straight line obtained from the detection values of at least two plotted points as the acceleration ratio.

The correction ratio generating portion 114 derives a correction inclination as a correction ratio using the obtained inclination. The correction inclination is an inclination for correcting the positional relationship between the road surface that the vehicle 300 is on, and at least one of the axis of the acceleration sensor and the axis of the vehicle in the reference information. Also, the correction inclination is an inclination that enables the extent to which the positional relationship between the road surface (a horizontal surface) and the sensor coordinate system and / or the vehicle coordinate system in the reference information obtained in the actual initialization process is off from the positional relationship between the road surface (a horizontal surface) and the sensor coordinate system and / or the vehicle coordinate system obtained when the initialization process is performed with an ideal reference road surface (in which the road surface angle θr = 0°), to be estimated. For example, the correction ratio generating portion 114 repeatedly derives a straight line, and sets the average of a plurality of inclinations as the correction inclination. An intermediate value between a maximum value and a minimum value of the plurality of inclinations of the straight lines may also be taken as the correction inclination. The correction inclination is stored in the memory 108.

With typical usage of the vehicle 300, the vehicle 300 often runs in a state near the first reference state described above, i.e., a state in which the vehicle posture angle θv is substantially 0°. Therefore, by repeatedly running the vehicle 300 after the initialization process, it is possible to derive a straight line that is parallel to the X-axis (i.e., the longitudinal axis) in a sensor coordinate system or a vehicle coordinate system obtained when the initialization process is performed on an ideal reference road surface, i.e., in a coordinate system in which the X-axis (i.e., the longitudinal axis) extends parallel to the road surface, and the inclination of this straight line can be made the correction inclination. The start the learning process can be triggered by the initialization process ending, the number of times that the ignition is switched ON / OFF after the initialization process, the running distance, or receiving an arbitrary learning start signal or the like.

The end of the learning process can be triggered by the derivation of the correction inclination being complete, the time elapsed after the learning process has started, the running distance, or the number of times the ignition has been switched ON / OFF after the learning process started or the like. The elapsed time, the running distance, and the number of times the ignition has been switched may be set to a time, distance, or number of times whereby the inclination of a predetermined number or more of straight lines is derived and it can be estimated that an accurate correction inclination has been derived, for example. The running distance, number of times the ignition is switched, and the elapsed time that trigger the start and end of the learning process may be set appropriately based on simulation or testing by the designer. It is also possible to not provide an end trigger for the learning process, and instead have the learning process continue run simultaneously with correction control during the lifetime of the leveling ECU 100, and have the correction inclination be repeatedly updated at a predetermined timing.

The angle calculating portion 1041 corrects the conversion table as the reference information using the obtained correction inclination. For example, in the correction of the reference information, the sensor coordinate system and / or the vehicle coordinate system in the reference information may be such that the correction inclination becomes 0 or close to 0 in the sensor coordinate system and / or the vehicle coordinate system. Also, the vehicle posture angle θv is calculated using the corrected reference information and the detection value of the acceleration sensor 110. The adjustment instructing portion 1042 generates an adjustment signal that corrects the optical axis position adjusted corresponding to the change in the total angle θ while the vehicle is stopped, based on the obtained vehicle posture angle θv, and instructs the leveling actuator 226 to correct the optical axis angle θo. Also, the adjustment instructing portion 1042 corrects the reference value of the vehicle posture angle θv retained in the memory 108.

For example, the adjustment instructing portion 1042 instructs the leveling actuator 226 to adjust the optical axis angle θo so that it becomes an optical axis angle θo corresponding to the vehicle posture angle θv obtained from the inclination of the linear approximation formula. Also, the adjustment instructing portion 1042 rewrites the reference value of the vehicle posture angle θv retained in the memory 108 with the vehicle posture angle θv obtained from the inclination of the linear approximation formula. As a result, by repeatedly rewriting the reference value of the road surface angle θr and the reference value of the vehicle posture angle θv, it is possible to inhibit detection error and the like of the acceleration sensor 110 from accumulating on the reference value, and thus inhibit the accuracy of the auto-leveling control from decreasing as a result.

The control portion 104 in this example embodiment executes correction control using the inclination of a straight line obtained by plotting the acceleration detected by the acceleration sensor 110 while the vehicle is traveling, the reference inclination as the reference information, and the correction inclination as the correction ratio. In the correction control described above, the correction control is executed using the reference information corrected with the correction inclination, but the invention is not particularly limited to this. For example, the vehicle posture angle θv may be obtained from inclination of the straight line and the reference information before the correction, and an angle corresponding to the amount of offset between the coordinate system after the correction and the coordinate system in the uncorrected reference information may be subtracted from this vehicle posture angle θv. In this case as well, error in the optical axis angle θo due to the inclination of the reference road surface is able to be canceled out.

In the learning process, the correction ratio generating portion 114 derives the correction inclination (correction ratio) excluding a change in the inclination (acceleration ratio) of a straight line that is based on a change in the total angle θ while the vehicle is stopped. That is, when a change in the total angle θ while the vehicle is stopped, i.e., a change in the vehicle posture angle θv is detected while the learning process is being performed, the correction ratio generating portion 114 calculates an inclination in which the amount of change has been subtracted from the inclination of a straight line derived thereafter. Then the correction ratio generating portion 114 calculates a correction inclination using the obtained inclination. As a result, the accuracy of the learning process is able to be further increased.

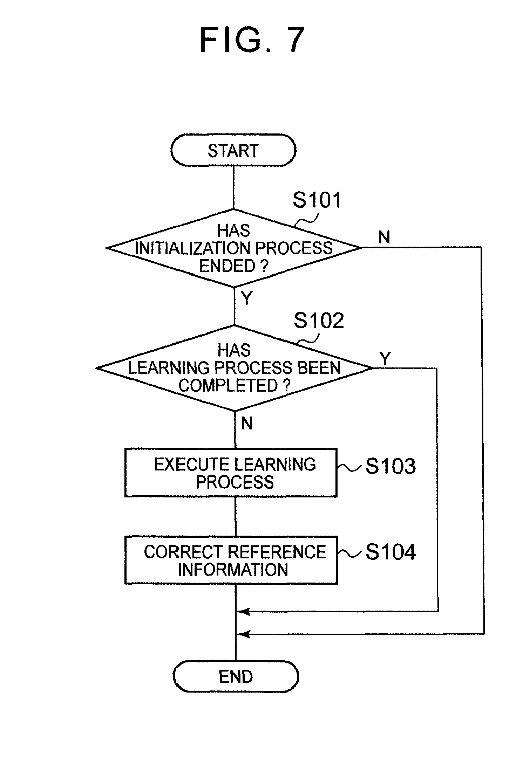

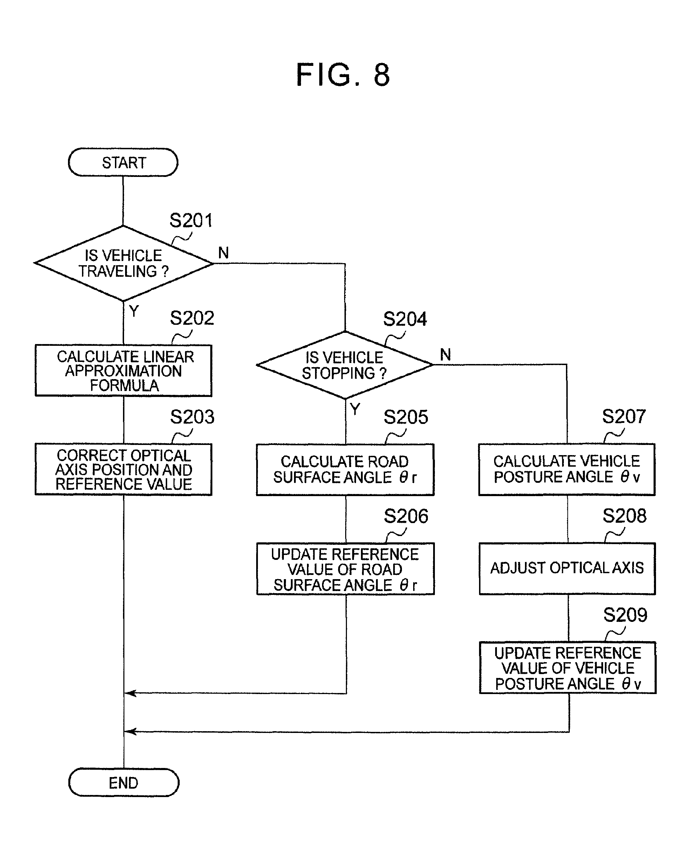

FIGS. 7 and 8 are flowcharts of auto-leveling control executed by the control apparatus of the vehicular lamp according to the example embodiment. The flow in FIG. 7 is repeatedly executed at a predetermined timing by the correction ratio generating portion 114 and the control portion 104 when a command to execute an auto-leveling control mode has been output by the light switch 304 and the ignition is turned on, and ends when the ignition is turned off, for example. Flere, a case in which the start of the learning process is triggered by the initialization process ending, and the end of the learning process is triggered by the derivation of the correction inclination being complete will be described as an example.

First, the correction ratio generating portion 114 determines whether the initialization process has ended (step S101). The end of the initialization process can be detected by receiving an initialization process ended signal from the control portion 104, for example. If the initialization process has ended (i.e., Y in step S101), the correction ratio generating portion 114 determines whether the learning process has already been executed (i.e., has been completed) (step S102). The correction ratio generating portion 114 may determine whether the learning process has been completed by determining whether a learning process completed flag is set, for example. If the learning process has not already been completed (i.e., N in step S102), the correction ratio generating portion 114 executes the learning process and derives a correction inclination (step S103). Also, when the derivation of the correction inclination is complete, the correction ratio generating portion 114 sets the learning process completed flag. The learning process completed flag is canceled when the initialization process is newly executed. Therefore, the correction ratio generating portion 114 is able to determine whether the learning process performed after the latest initialization process has ended has been completed.

When the learning process ends, the control portion 104 corrects the reference information obtained with the initialization process using the correction inclination obtained in the learning process (step S104), and this routine ends. If the initialization process has not ended (i.e., N in step S101) or if the learning process has not been completed (i.e., Y in step S102), the correction ratio generating portion 114 ends this routine.

The flow in FIG. 8 is repeatedly executed at a predetermined timing by the control portion 104 when a command to execute the auto-leveling control mode has been output by the light switch 304 and the ignition is turned on, and ends when the ignition is turned off, for example.

First, the control portion 104 determines whether the vehicle is traveling (step S201). If the vehicle is traveling (i.e., Y in step S201), the control portion 104 calculates a linear approximation formula from a plurality of detection values of the acceleration sensor 110 (step S202). Then, the control portion 104 corrects the reference values of the optical axis angle θo and the vehicle posture angle θv using the inclination of the obtained linear approximation formula, and reference information corrected with the correction inclination obtained by the learning process (step S203), and ends this routine.

If the vehicle is not traveling (i.e., N in step S201), the control portion 104 determines whether the vehicle is stopping (i.e., in the act of stopping; whether it is when the vehicle stops) (step S204). If the vehicle is stopping (i.e., Y in step S204), the control portion 104 calculates the road surface angle θr by subtracting the reference value of the vehicle posture angle θv from the current total angle θ (step S205). The, the control portion 104 updates the reference value of the road surface angle θr with the calculated road surface angle θr (step S206), and ends the routine. If the vehicle is not stopping (i.e., N in step S204), it means that the vehicle is stopped (i.e., it is while the vehicle is stopped), so the control portion 104 calculates the vehicle posture angle θv by subtracting the reference value of the road surface angle θr from the current total angle θ (step S207). Continuing on, the control portion 104 adjusts the optical axis angle θo using the calculated vehicle posture angle θv (step S208). Then, the control portion 104 updates the reference value of the vehicle posture angle θv with the calculated vehicle posture angle θv (step S209), and ends the routine.

As described above, in the leveling ECU 100 that serves as the control apparatus of a vehicular lamp according to this example embodiment, after the initialization process, the correction ratio generating portion 114 executes the learning process and derives the correction inclination from the inclination of a straight line obtained by plotting the detection values of the acceleration sensor 110 while the vehicle is traveling. Then, the control portion 104 performs an optical axis adjustment of the lamp unit 10 using the inclination of the straight line obtained by plotting the detection values of the acceleration sensor 110 while the vehicle is traveling, the reference information obtained in the initialization process, and the correction inclination obtained in the learning process. The offset between the coordinate system in the uncorrected reference information and the coordinate system in the reference information corrected with the correction inclination, in other words, the inclination of the reference road surface, corresponds to the offset between the vehicle coordinate system and the optical axis O in the initial position. Therefore, the leveling ECU 100 does not perform optical axis control for this offset between the vehicle coordinate system and the optical axis O in the initial position. Thus, even if the reference road surface at the time the initialization process is performed is inclined, error in the optical axis angle θo due to this inclination is able to be inhibited from occurring in the optical axis control. Therefore, the leveling ECU 100 of this example embodiment enables the accuracy of auto-leveling control to be increased.

The invention is not limited to the example embodiment described above. That is, various modifications such as design changes and the like based on the knowledge of one skilled in the art are also possible, and example embodiments with such modifications are also included in the scope of the invention. New example embodiments created by combinations of the example embodiment described above and modifications have the combined effects of each of the combined example embodiments and modifications.

In order to more accurately calculate the error θoffset, a signal indicative of inclination angle information of the reference road surface as vehicle information may be transmitted to the leveling ECU 100 at the time the initialization process is performed or the like, for example.

In the example embodiment described above, the reference information generating portion 112 and the correction ratio generating portion 114 are provided outside the control portion 104, but both of these may also be provided inside the control portion 104. That is, the control portion 104 may also generate the reference information and generate the correction ratio.

The invention according to the example embodiment described above may also be specified by any of the aspects described below.

One aspect relates to a vehicular lamp system a vehicular lamp system including: a vehicular lamp in which an optical axis is adjustable; an acceleration sensor; and a control apparatus configured to adjust an optical axis position of the vehicular lamp. The control apparatus includes: a receiving portion configured to receive a detection value of the acceleration sensor; a reference information retaining portion configured to retain reference information indicative of a positional relationship of an axis of the acceleration sensor in a state in which the acceleration sensor is mounted to a vehicle, an axis of the vehicle that determines a posture of the vehicle, and a road surface that the vehicle is on, wherein the reference information is obtained in a predetermined initialization process; a correction ratio generating portion configured to, after the initialization process, calculate an acceleration ratio that is a ratio of an amount of change in acceleration in a vehicle longitudinal direction of the vehicle while traveling to an amount of change in acceleration in a vehicle vertical direction of the vehicle while traveling, and to derive a correction ratio for correcting a positional relationship of the road surface and at least one of the axis of the acceleration sensor and the axis of the vehicle in the reference information, using the obtained acceleration ratio; and a control portion configured to, after the correction ratio is derived, output an adjustment signal instructing that an optical axis position of the vehicular lamp be adjusted, using the acceleration ratio, the reference information, and the correction ratio.

Another aspect relates to a control method for a vehicular lamp. The control method includes: retaining reference information indicative of a positional relationship of an axis of an acceleration sensor in a state in which the acceleration sensor is mounted to a vehicle an axis of the vehicle that determines a posture of the vehicle, and a road surface that the vehicle is on, wherein the reference information is obtained in a predetermined initialization process; calculating, after the initialization process, an acceleration ratio that is a ratio of an amount of change in acceleration in a vehicle longitudinal direction of the vehicle while traveling to an amount of change in acceleration in a vehicle vertical direction of the vehicle while traveling; deriving a correction ratio for correcting a positional relationship of the road surface and at least one of the axis of the acceleration sensor and the axis of the vehicle in the reference information, using the obtained acceleration ratio; and outputting, after the correction ratio is derived, an adjustment signal instructing that an optical axis position of the vehicular lamp be adjusted, using the acceleration ratio, the reference information, and the correction ratio.

## Claims

1. A control apparatus of a vehicular lamp, **characterized by** comprising:
a receiving portion (102) configured to receive a detection value of an acceleration sensor (110);
a reference information retaining portion (108) configured to retain reference information indicative of a positional relationship of an axis of the acceleration sensor (110) in a state in which the acceleration sensor (110) is mounted to a vehicle (300), an axis of the vehicle that determines a posture of the vehicle (300), and a road surface that the vehicle (300) is on, wherein the reference information is obtained in a predetermined initialization process;
a correction ratio generating portion (114) configured to, after the initialization process, calculate an acceleration ratio that is a ratio of an amount of change in acceleration in a vehicle longitudinal direction of the vehicle (300) while traveling to an amount of change in acceleration in a vehicle vertical direction of the vehicle (300) while traveling, and to derive a correction ratio for correcting a positional relationship of the road surface and at least one of the axis of the acceleration sensor (110) and the axis of the vehicle (300) in the reference information, using the obtained acceleration ratio; and
a control portion (104) configured to, after the correction ratio is derived, out put an adjustment signal instructing that an optical axis position of the vehicular lamp (10) be adjusted, using the acceleration ratio, the reference information, and the correction ratio.

2. The control apparatus according to claim 1, wherein the correction ratio generating portion (114) is configured to plot the detection value of the acceleration sensor (110) of at least one of when the vehicle (300) is accelerating and when the vehicle (300) is decelerating, on a coordinate system in which the acceleration in the vehicle longitudinal direction is set as a first axis and the acceleration in the vehicle vertical direction is set as a second axis, and to calculate as the acceleration ratio an inclination of a vector or a straight line obtained from at least two plotted points.

3. The control apparatus according to claim 1 or 2, wherein:
the reference information retaining portion (108) is configured to retain a reference value of a road surface angle that is an inclination angle of a road surface with respect to a horizontal plane and a reference value of a vehicle posture angle that is an inclination angle of the vehicle (300) with respect to the road surface;
the control portion (104) is configured to obtain a total angle that is an inclination angle of the vehicle (300) with respect to the horizontal plane from the detection value of the acceleration sensor;
the control portion (104) is configured to, in response to a change in the total angle while the vehicle is stopped, generate the adjustment signal using the vehicle posture angle obtained from the total angle and the reference value of the road surface angle, and to update the reference value of the vehicle posture angle with the obtained vehicle posture angle; and
the control portion (104) is configured to, in response to a change in the total angle while the vehicle is traveling, stop outputting the adjustment signal or output a maintain signal instructing that the optical axis position be maintained, to update the reference value of the road surface angle with a road surface angle obtained from the total angle and the reference value of the vehicle posture angle while the vehicle is traveling, to plot the detection value of the acceleration sensor (110) of at least one of when the vehicle is accelerating and when the vehicle is decelerating, on a coordinate system in which the acceleration in the vehicle longitudinal direction is set as a first axis and the acceleration in the vehicle vertical direction is set as a second axis, and to correct the optical axis position adjusted corresponding to the change in the total angle while the vehicle is stopped, using an inclination of a vector or a straight line obtained from at least two plotted points.

4. The control apparatus according to claim 3, wherein the correction ratio generating portion (114) is configured to derive the correction ratio, excluding a change in the acceleration ratio based on the change in the total angle while the vehicle is stopped.

5. The control apparatus according to claim 1 or 2, wherein the reference information retaining portion (108) is configured to retain a reference value of a road surface angle that is an inclination angle of a road surface with respect to a horizontal plane and a reference value of a vehicle posture angle that is an inclination angle of the vehicle (300) with respect to the road surface.

6. The control apparatus according to claim 5, wherein, when the vehicle stops, the control portion (104) is configured to obtain a total angle that is an inclination angle of the vehicle (300) with respect to the horizontal plane from the detection value of the acceleration sensor, and to calculate the road surface angle from the total angle and the reference value of the vehicle posture angle, and update the reference value of the road surface angle with the obtained road surface angle.

7. The control apparatus according to claim 5 or 6, wherein, while the vehicle is stopped, the control portion (104) is configured to obtain a total angle that is an inclination angle of the vehicle (300) with respect to the horizontal plane from the detection value of the acceleration sensor, to calculate the vehicle posture angle from the total angle and the reference value of the road surface angle, and to generate the adjustment signal instructing that the optical axis position be adjusted corresponding to a change in the total angle, using the obtained vehicle posture angle.

8. The control apparatus according to claim 7, wherein the control portion (104) is configured to update the reference value of the vehicle posture angle with the obtained vehicle posture angle.

9. The control apparatus according to claim 7 or 8, wherein the control portion (104) is configured to plot the detection value of the acceleration sensor of at least one of when the vehicle is accelerating and when the vehicle is decelerating, on a coordinate system in which the acceleration in the vehicle longitudinal direction is set as a first axis and the acceleration in the vehicle vertical direction is set as a second axis, to calculate an inclination of a vector or a straight line from at least two plotted points, to calculate the vehicle posture angle using the obtained inclination of the vector or the straight line, and to correct the optical axis position adjusted corresponding to the change in the total angle while the vehicle is stopped, using the obtained vehicle posture angle.

10. The control apparatus according to any one of claims 5 to 9, wherein the control portion (104) is configured to obtain a total angle that is an inclination angle of the vehicle (300) with respect to the horizontal plane from the detection value of the acceleration sensor; and to stop outputting the adjustment signal or output a maintain signal instructing that the optical axis position be maintained, in response to a change in the total angle while the vehicle is traveling.

11. A vehicular lamp system including:
a vehicular lamp (10) in which an optical axis is adjustable;
an acceleration sensor (110); and
a control apparatus (100) configured to adjust an optical axis position of the vehicular lamp (10),
the vehicular lamp system **characterized in that** the control apparatus (100) includes:
a receiving portion (102) configured to receive a detection value of the acceleration sensor (110);
a reference information retaining portion (108) configured to retain reference information indicative of a positional relationship of an axis of the acceleration sensor (110) in a state in which the acceleration sensor (110) is mounted to a vehicle (300), an axis of the vehicle (300) that determines a posture of the vehicle (300), and a road surface that the vehicle (300) is on, wherein the reference information is obtained in a predetermined initialization process;
a correction ratio generating portion (114) configured to, after the initialization process, calculate an acceleration ratio that is a ratio of an amount of change in acceleration in a vehicle longitudinal direction of the vehicle (300) while traveling to an amount of change in acceleration in a vehicle vertical direction of the vehicle (300) while traveling, and to derive a correction ratio for correcting a positional relationship of the road surface and at least one of the axis of the acceleration sensor (110) and the axis of the vehicle (300) in the reference information, using the obtained acceleration ratio; and
a control portion (104) configured to, after the correction ratio is derived, output an adjustment signal instructing that an optical axis position of the vehicular lamp (10) be adjusted, using the acceleration ratio, the reference information, and the correction ratio.

12. A control method for a vehicular lamp, **characterized by** comprising:
retaining reference information indicative of a positional relationship of an axis of an acceleration sensor (110) in a state in which the acceleration sensor (110) is mounted to a vehicle (300) an axis of the vehicle (300) that determines a posture of the vehicle (300), and a road surface that the vehicle (300) is on, wherein the reference information is obtained in a predetermined initialization process;
calculating, after the initialization process, an acceleration ratio that is a ratio of an amount of change in acceleration in a vehicle longitudinal direction of the vehicle (300) while traveling to an amount of change in acceleration in a vehicle vertical direction of the vehicle (300) while traveling;
deriving a correction ratio for correcting a positional relationship of the road surface and at least one of the axis of the acceleration sensor (110) and the axis of the vehicle (300) in the reference information, using the obtained acceleration ratio; and
outputting, after the correction ratio is derived, an adjustment signal instructing that an optical axis position of the vehicular lamp (10) be adjusted, using the acceleration ratio, the reference information, and the correction ratio.
